# EUROPEAN PATENT APPLICATION

(11) **EP 2 583 942 A1**
(43) Date of publication of application: **24.04.2013**
(21) Application number: 12189185.7
(22) Date of filing: 19.10.2012
(51) Int. Cl.: C01B 31/04

(54) **Process for formation of foliated fine graphite particles**

(30) Priority: 19.10.2011 US 201161549003 P; 27.03.2012 RU 2012111793
(71) Applicant: Showa Denko K.K., Tokyo 105-8518 (JP)
(72) Inventor: Makhmutov, Fanil Akhatovich, 300039 Tula (RU); Logunov, Eugeny Ivanovich, 300034 Tula (RU); Shinokazi, Kenji, Tokyo, 105-8518 (JP)
(74) Representative: Strehl Schübel-Hopf & Partner

(57) **Abstract**

A low-temperature process for preparing flat carbon based nanostructured material, and namely foliated, fine graphite particles having low thickness and high aspect ratio. The process comprises the steps of: subjecting a particulate graphite to a mechanical attrition treatment in the presence of an alkaline reactant or a mixture comprising the alkaline reactant; exposing the graphite particles to an intercalating solvent to cause the solvent to penetrate between carbon layers of graphite; and delivering an ultrasonic energy into a dispersion of the graphite particles for a period of time sufficient to cause the formation of the nanostructured material. The carbon based nanostructures (CBNS) obtained by this method have a thickness in the range of 4-20 nm and an aspect ratio 500-7000 and various surface chemistry, and can be used as a highly functional graphite material in a wide range of applications, in particular for electrochemical applications in batteries and fuel cells.

## Description

### TECHNICAL FIELD

This invention relates to a low-temperature process for the preparation of foliated fine graphite particles having a small thickness and high aspect ratio. The carbon based nanostructures (CBNS) obtained by this method can have a thickness in the range of 4-20 nm and an aspect ratio of 500-7000 and various surface chemistry, and can be used as a highly functional graphite material in a wide range of applications.

### BACKGROUND ART

Graphene-like flat CBNS are known carbon based materials with various unique properties, including high electrical and heat conductivity. The preparation of CBNS having several carbon layers seems to be much simpler, as compared to ideal graphene. At the same time, many of these flat CBNS have near the same conductivity and optical properties as an ideal graphene, and, as a result, can be used in a wide range of commercial applications.

An object of the present invention is the development of a new method for the preparation of flat CBNS, that can be suitable for making flat CBNS on a large scale.

Graphite materials have excellent properties such as high electrical conductivity, lubricant properties, corrosion resistance, and heat resistance, and are being used in wide range of industrial applications. In most of these applications, graphite is usually used as molded articles consisting of graphite alone or a combination of graphite and other materials. Among others, graphite powder occupies an important position as a material for the formation of flat flexible electrodes, solid lubricants and so on.

A particulate graphite for these applications should have the form of fine particles having a high aspect ratio, because they can be uniformly dispersed so as to have many mutual contacts in order to impart thereto functional properties such as electrical conductivity and thermal conductivity.

In the prior art, particulate graphite has been usually prepared by a wet or dry grinding method for mechanically dispersing natural or synthetic graphite. However, all the known grinding methods involve problems. Most important of these problems is that it is difficult to reduce (refine) graphite to fine particles having a high dispersion degree because the crystallinity of graphite is so developed that slip occurs between graphite crystalline lattice planes. As a result, by increasing either of grinding power or the grinding time, a fine particle having a uniform shape cannot be obtained. On the other hand, where graphite powder is prepared by grinding of Thermal Expanded Graphite (TEG) (for example, prepared by heat treatment of intercalated graphite), it has been difficult to reduce expanded graphite to fine particles by using common mechanical grinding methods. Specifically, the crystalline lattice-planes of expanded graphite tend to become oriented perpendicularly to the direction of the loads or impacts, resulting in the formation of thin films. Moreover, TEG particles are very soft and are easily squashed and pressed into a plate-like mass. Furthermore, TEG particles are very bulky and light, and tend to scatter during the grinding process.

To avoid these problems, Japanese Patent Application Laid-Open No. 61-127612-A (DERWENT abstract 86-194944/30) discloses a method for preparing an electrically conductive graphite material wherein TEG is ground while the interstices thereof are impregnated with a liquid or, in addition, the liquid is frozen. The problem of particle scattering can be solved thereby, but most problems still remain unsolved. Specifically, since this method is based on grinding by direct mechanical impact forces, it is desirable to impregnate the interstices of the expanded graphite completely with a liquid, and additional operations of liquid impregnation-elimination arise. Furthermore, although the expanded graphite is impregnated with a liquid, it is difficult to grind it uniformly. Finally, a most important problem of this graphite refining method is that it has a low efficiency when practiced on a large scale.

US Patent 5,330,680 represents a method comprising the steps of dispersing TEG particles into a liquid and comminuting the graphite particles by exposing the particles to ultrasonic waves in the liquid. This method makes it possible to prepare more uniform foliated fine graphite particles having a small diameter and a high aspect ratio. The patent declares that TEG particles are directly dispersed into the liquid without requiring any special operation for impregnating the interstices present in the structure of the particles with the liquid, and the particles are comminuted while being allowed to stand in the liquid. According to this method, foliated fine graphite particles are produced having a thickness of 1 µm (1000 nm) or less, a diameter of 1 to 100 µm and an average aspect ratio ranging 100-7000.

However, this method does not achieve a uniform splitting of TEG crystallites, because the intercalation of molecules of liquid inside of interlayer areas of graphite is a slow process. Under real conditions used in US Patent 5,330,680, the intercalation cannot take place through the whole volume inside the graphite crystals, and one can expect the intercalation into interlayer areas of surface layers of graphite particles only. Such a surface splitting out mode proceeds very slowly. The results obtained in this patent confirm this supposition since no data are given confirming a crystallite size of less than around 70 nm.

In short, it is very difficult to prepare fine graphite particles having uniformly distributed small particle sizes (especially thickness) and high aspect ratios according to prior art grinding or other methods. Thus, there is a need for preparation methods for obtaining uniform thin graphite particles.

### BRIEF SUMMARY OF THE INVENTION

In order to solve the above-described problems, the present invention provides a process for the formation of uniform foliated fine graphite particles having a small thickness, high aspect ratio and various surface chemistry, which can be used easily to prepare highly functional graphite materials for a wide range of applications.

The process of the present invention for the preparation of flat carbon based nanostructured material comprises the following steps: (a) subjecting a particulate graphite to a mechanical attrition treatment in the presence of an alkaline reactant or a mixture comprising the alkaline reactant, (b) exposing the graphite particles to an intercalating solvent to cause the solvent to penetrate between carbon layers of graphite, and (c) delivering an ultrasonic energy into a dispersion of the graphite particles for a period of time sufficient to cause the formation of the nanostructured material.

This method makes it possible to prepare uniform foliated fine graphite particles having a small thickness of graphite crystallites, in the range of 4-20 nm; and a high aspect ratio in the range of 500-7000. Moreover, it makes possible the preparation of thin foliated particles of CBNS with various surface chemistry, from completely oxidized (that is, applicable for compatibilization with various polymer matrices in composites) to completely reduced CBNS having high electrical conductivity, for electrochemical applications in batteries and fuel cells.

While not wishing to be bound to any theory, the new and unexpected effect of the present invention is caused probably by splitting of the particulate graphite due to subjecting the particulate graphite to a mechanical attrition treatment in the presence of the alkaline reactant, which is facilitated by chemical oxidation of perimeters of fine graphite flakes in the presence of an alkaline hydroxide, because of topochemical reactions known in the art. However, this grinding process itself has limitations related to refining of the crystallites (see the above discussion relating to grinding technology). Moreover, more intensive and prolonged grinding is known to lead to formation of amorphous carbon. The present inventors have confirmed experimentally that for graphite samples so obtained, the powder XRD patterns show no graphite specific peaks.

At the next step, solvent intercalation proceeds via penetration of solvent molecules more uniformly into internal interlayer areas of graphite crystallites, because of their lower thickness on the one hand and better compatibility with surface oxidized carbon particles on the other hand. As a result, following delivery of the ultrasonic energy into the dispersion results in additional substantial splitting thereof, causing the formation of nanostructured material.

The foliated fine graphite particles thus obtained are crystalline fine graphite particles having a high aspect ratio, tending not to cohere, and being uniform in shape. Thus, they are useful as a material having excellent properties such as high chemical compatibility with plastic matrices, and (if needed) high electrical conductivity and thermal conductivity.

### DETAILED DESCRIPTION OF THE INVENTION

For performing the CBNS preparation according to the disclosed method of the present invention, different types of mills can be used at the step of subjecting the particulate graphite to a mechanical attrition treatment in the presence of an alkaline reactant, as long as the energy provided by the mill is sufficient to split the graphite particles. Bore mills and other mill types are appropriate.

The alkaline reactant used herein can represent a solid alkali metal hydroxide or alkaline earth metal hydroxide, including Li, Na, K and Rb hydroxides, as well as Ca, Mg and Sr hydroxides. Sodium, potassium, calcium and magnesium hydroxides are preferable, because of their high alkalinity and operability thereof. Potassium hydroxide is most preferable.

The mixture of particulate graphite with additives based on alkali metal or alkaline earth metal hydroxide can optionally include an inorganic salt oxidant as a third component. The CBNS samples obtained by using an inorganic oxidant as an additive usually have a higher specific surface area, i.e., they are more finely foliated. Moreover, they have specific properties, such as higher oxygen content, better wettability with water and with other polar solvents. Analysis of their surface functionality indicates that carboxylic groups predominate on the surface. The inorganic salt oxidant as the additive can be selected from the group consisting of alkali metal permanganates, persulfates and perchlorates. Potassium permanganate is most preferred.

Moreover, the step of mechanical attrition treatment of particulate graphite in the presence of an alkaline reactant can be performed in the presence of a tetraalkylammonium hydroxide of general formula R₁R₂R₃R₄NOH, where R₁₋₄ is a C₁-C₈ alkyl group. Tetramethylammonium hydroxide Me₄NOH or trimethylalkylammonium hydroxides of general formula Me₃R₁NOH wherein R₁ is C₁-C₈ alkyl group are preferable.

The following steps of: (b) causing an intercalating solvent to penetrate between carbon layers of graphite, and (c) delivering the ultrasonic energy into the dispersion of the graphite particles can be performed either as separate steps, or as a combined step, with the intercalating the solvent into interlayer areas of graphite and splitting graphite into thin flakes thereby causing the formation of nanostructured material during sonification treatment.

These steps of the process of the invention can be performed effectively by using a liquid solvent selected from one of the two following groups: (i) aliphatic polyols; or (ii) methylphenylsiloxanes.

Tests for TEG exfoliation in a solvent media were performed at the first step by using a simple procedure. After chemical/mechanical treatment, washing, separation and drying, TEG was mixed with the solvent to obtain a 0.1 %wt. dispersion and then treated by mechanical agitation for 1 hour. Thereafter, the mixture was treated by ultrasound for 1 hour using a probe ultrasonic dispergation (disperser) (generator) unit UZDN-2T. The suspension of the splitted TEG so obtained was left standing for 24 hours. After the expiration of this period, an estimate of the efficiency of the solvent used was made by visual observation and gravimetric analysis of suspended matter and deposit formed. A "stable" suspension is one in which the CBNS are suspended across the volume; and the deposit amount contains less than 20% of total graphite matter. For stable suspensions, the CBNS sample was ultracentrifugated and dried at 130 degrees C in air. Then the sample was analysed by XRD and SEM.

With regard to aliphatic diols, the present inventors have established that the ultrasonic treatment provided in the presence of terminal C₂-C₆ diols is most effective. Examples of the terminal C₂-C₆ diols are terminal ethylene glycol, propylene glycol, butanediol, pentanediol and hexanediol. Ethylene glycol and butanediol are most preferable.

Another group of solvents that are useful as the effective media for performing steps of solvent intercalating and ultrasonic treatment for CBNS preparation according to the present invention are methylphenylsiloxanes. In particular, methylphenylsiloxane (MPS) oligomers representing cyclic methylphenylsiloxanes with the general formula of [Si(Me)(Ph)O]ₙ where n = 4-8 are suitable. Liquid cyclic methylphenylsiloxane with the formula of [Si(Me)(Ph)O]₄ is most preferable.

### EXAMPLES

Examples illustrating the present invention are set forth below, but the present invention is not limited thereto.

Example 1*
Thermally expanded graphite (TEG) having a bulk density 4.5 kg/m³ was used as a starting material. Its structure characteristics were the following: Specific surface area Sₛ (as defined by nitrogen adsorption according to BET method) was 19.1 m²/g; Crystallite size L_{c} (as defined by powder XRD) was 29.7 nm.

A mixture of 1 g of TEG and 5 g of KOH was charged into a 225 ml cylinder vessel (Mo-doped stainless steel (SS)) together with 400 g of stainless steel (SS) balls having a diameter ϕ of 10 mm (2/3 of volume). Mechanical/chemical activation was provided by using a planetary ball mill Pulverisette 6 (Fritsch) at 650 revolutions/min. After milling for 3 hours, the vessel was opened, water was added in an amount of 50 ml and treatment was continued for 10 minutes at 500 revolutions/min. Water was added up to a volume of 1 liter, and neutralization by HC1, filtration on a glass filter and drying at 130 degrees C was carried out.

The structural measurements give the following results:
Specific surface area Sₛ 110 m²/g;
Crystallite size L_{c} 7.5 nm.

The TEG exfoliation in solvent media.

100 mg of the dried TEG was mixed with 100 ml of ethylene glycol to obtain a 0.1 %wt. solution. The mixture was treated for 1 hour by ultrasound using a probe ultrasonic dispergation (disperser) (generator) unit UZDN-2T (frequency 22 kHz, power 400 W). The suspension of the splitted TEG so obtained after standing for 24 hours was one in which the CBNS remained suspended across the volume; and no substantial deposition was observed. The sample after ultracentrifugation and drying at 130 degrees C in air was analysed by XRD and SEM and the following results were obtained.
Specific surface area Sₛ 145 m²/g;
Crystallite size L_{c} 5.6 nm.

The aspect ratio for the obtained CBNS was estimated from SEM observation of the sample. The data of semi-quantitative treatment of SEM patterns indicate that the CBNS particles were flake-like and highly anisotropic ones, with an average particle length of 10 µm, an average particle width of 2 µm; and aspect ratio of 1200.

In order to estimate the surface chemistry of CBNS prepared by using the method of the invention, the present inventors analyzed active functional groups on the surface.
The results are given below.

| | |
|---|---|
| Phenolic + carboxylic groups in total | 0.60 mol/g |
| Carboxylic groups | 0.09 mol/g |
| Phenolic groups (calculated) | 0.51 mol/g |
| Carbonyl groups | 0.04 mol/g. |

One can see that "phenolic" hydroxyl groups (i.e., -OH groups connected to tertiary carbon atom, ≡C-OH) are predominant in the obtained sample.

Examples 2-4
Examples 2-4 were prepared generally according to the procedure described in Example 1. The same TEG was used as starting material. The variable parameters of CBNS preparation and specific values thereof are given in Table 1 below.

**Tab. 1**

| Example No. | Alcaline hydroxide | Treatment duration [hr] | Sₛ [m²/g] | L_{c} [nm] |
|---|---|---|---|---|
| 1 | KOH | 3 | 110 | 7.5 |
| 2 | NaOH | 4 | 98 | 8.1 |
| 3 | Me₄NOH | 2 | 124 | 5.3 |
| 4 | Me₃R₁NOH | 5 | 107 | 6.9 |

Example 5
The CBNS sample was prepared generally according to the procedure described in Example 1. Potassium permanganate was used as the third component, inorganic salt oxidant, in addition to potassium hydroxide. The same TEG was used as the starting material.

A powder mixture of 500 mg of TEG, 5 g of KOH and 2.5 g of KMnO₄ was treated in a planetary ball mill at 650 revolutions/min for 1 hour. After spontaneous cooling, ethylene glycol (EG) was added in an amount of 50 ml and milling was continued for 30 minutes more. Water was added in an amount of 50 ml, agitation was carried out and the obtained TEG suspension was discharged. Distilled water was added up to the volume of 1 liter and neutralization by HCl was performed. Hydrogen peroxide was added followed by agitation, to perform the oxidation of residual manganese compounds to soluble manganates. The suspension was centrifugated at 6000g until a neutral pH is achieved. Ethanol was added and the suspension was rotary evaporated under low vacuum. The obtained CBNS sample was dried at 115 degrees C.
Specific surface area (Sₛ) of the sample was 132 m²/g.
Crystallite size L_{c} was 6.3 nm.
Both XRD and BET measurements demonstrate the advanced TEG exfoliation degree obtained when potassium permanganate additive is used.

The additional exfoliation of this CBNS sample in the solvent media was performed exactly as described for Example 1. The obtained sample was analyzed by XRD and SEM, and the following results were obtained.
Specific surface area Sₛ 148 m²/g;
Crystallite size L_{c} 5.1 nm.

The surface titration analytic procedures were applied to the CBNS dried at 115 degrees C. The results are presented below.

| | |
|---|---|
| Phenolic + carboxylic groups total | 0.77 mol/g |
| Carboxylic groups | 0.48 mol/g |
| Phenolic groups (calculated) | 0.26 mol/g |
| Carbonyl groups | 0.11 mol/g. |

One can see that carboxylic functional groups become to be predominant ones in the case where an inorganic salt oxidant is used.
Elemental analysis for this CBNS sample demonstrates the content of C, H and O (defined as a balance) to be 85.0 % by weight; 0.2 % by weight and 14.8 % by weight, respectively. The oxygen content was about 1.5 times higher than that for the CBNS sample prepared in Example 1.

Examples 6-9
The step of chemical/mechanical treatment of TEG for these samples was performed according to Example 1. The same TEG was used as the starting material.
The solvents at the steps of solvent intercalating and sonification, as well as ultrasonic treatment conditions are given in Table 2.

**Tab. 2**

| Example No. | Solvent | Ultrasonic energy / Treatment duration [W / h] | Sₛ [m²/g] | L_{c} [nm] |
|---|---|---|---|---|
| 6 | Ethylene glycol | 600 | 210 | 5.4 |
| 7 | Butanediol | 120 | 122 | 6.9 |
| 8 | MPS olygomer [Si(Me)(Ph)O]₄ | 400 | 247 | 4.3 |
| 9 | MPS olygomer [Si(Me)(Ph)O]₈ , 10%wt. solution in p-xylene | 300 | 197 | 4.7 |

Example 10
The CBNS sample was prepared according to the procedure described in Example 1. Then the sample was subjected to reduction by annealing under argon atmosphere in flow-through mode at 900 degrees C for 3 hours.
The data on surface chemistry analysis for the CBNS sample so prepared were as follows.

| | |
|---|---|
| Carboxylic groups | 0.00 mol/g |
| "Phenolic" groups | 0.12 mol/g |
| Carbonyl groups | 0.00 mol/g. |

Data of elemental analysis of this reduced sample demonstrate the following values:
[C] = 98.9%; [H] < 0.00%; [0] (calculated) = 1.1%.
   Thus, oxygen content and tert-hydroxylic group content have decreased strongly.

The structure of the reduced sample was analyzed by XRD and SEM, and the following results have been found.
Specific surface area Sₛ 139 m²/g;
Crystallite size L_{c} 5.5 nm.

One can see that the specific surface area of the reduced sample remains high, and also crystallite size has not changed. So, no recrystallization of CBNS has taken place as a result of reduction under the soft conditions used.

To estimate a possibility of potential applications in electrochemical devices for CBNS prepared according to the present invention, the inventors have made an estimation of electrical conductivity of the reduced sample. The inventors provided dispergation (dispersing) of a freshly prepared suspension in dry ethanol (5%wt.), 30 min sonification of the suspension, slow dead-end filtration of the probe through a membrane filter with the pore size of 0.2 µm made from the nuclear PET, with the evacuation of under-membrane area. Final drying by film under vacuum without heating was used. A film coating was obtained on the membrane support, with enough good cohesion for keeping its structure without crumbling. Thickness of the film can be varied in the range of 10-100 µm. The measurement of the electric resistance of the film with the thickness of 35 µm by using standard 4-contact cell shows the value of 14 ohm. This is a sufficiently high value for a not-pressured sample, prepared without using conductive binders. The resistance of the not annealed CBNS sample was of very low value, as low as about 3.2 x 10⁻³ ohm. This value is expected for surface oxidized graphite.

## Claims

1. A process for the preparation of a flat carbon based nanostructured material, comprising:
(a) subjecting a particulate graphite to a mechanical attrition treatment in the presence of an alkaline reactant or a mixture comprising the alkaline reactant,
(b) exposing the graphite particles to an intercalating solvent to cause the solvent to penetrate between carbon layers of the graphite,
(c) delivering an ultrasonic energy into a dispersion of the graphite particles for a period of time sufficient to cause a formation of the nanostructured material.

2. The process of claim 1, wherein the alkaline reactant is a solid alkali metal hydroxide or alkaline earth metal hydroxide.

3. The process of claim 1, wherein the mixture comprising the alkaline reactant contains an inorganic salt oxidant selected from the group consisting of alkali metal permanganates, persulfates and perchlorates.

4. The process of claim 1, wherein the alkaline reactant is a tetraalkylammonium hydroxide of general formula R₁R₂R₃R₄NOH, wherein R₁₋₄ is C₁-C₈ alkyl group.

5. The process of claim 1, wherein said exposing and ultrasonic treatment is provided by a solvent selected from the group consisting of aliphatic polyols or methylphenylsiloxanes.

6. The process of claim 1, wherein the ultrasonic treatment is conducted in the presence of terminal C₂-C₆ diols.

7. The process of claim 1, wherein the ultrasonic treatment is conducted in the presence of a methylphenylsiloxane having the following general formula:
[Si(Me)(Ph)O]ₙ wherein n = 4-10.

8. The process of claim 1, wherein the ultrasonic energy delivery is applied for a time of 1 to 4 hours at 120 W to 600 W.

9. A flat carbon based nanostructured material, obtainable by the process according to any one of claims 1 to 8.
